# EUROPEAN PATENT APPLICATION

(11) **EP 3 979 149 A1**
(43) Date of publication of application: **06.04.2022**
(21) Application number: 20199409.2
(22) Date of filing: 30.09.2020
(51) Int. Cl.: G06Q 10/00

(54) **METHOD AND DATA-TRANSFER-SYSTEM FOR TRANSFERRING DATA BETWEEN A DATA SOURCE AND A DATA SINK**

(71) Applicant: Siemens Aktiengesellschaft, 80333 München (DE)
(72) Inventor: Batsiukov, Kiryl, 81379 München (DE); Buschmann, Frank, 80336 München (DE); Oeh, Dominik, 96146 Altendorf (DE); Telschig, Kilian, 81543 München (DE); Weiss, Johannes, 96170 Lisberg (DE); Winhuysen, Jan, 80469 München (DE)

(57) **Abstract**

In order to transfer data source data (DSCD) of a data source (DSC) being destined for a data sink (DSN), in particular for a "Condition Based Service or a Condition Based Maintenance <CBS>"-data evaluation executed in the data sink (DSN), from the data source to the data sink spaced from each other within a business premises (BP), by which the data transfer is enabled at least more or less online without the data source and the data sink are connected and without any drawbacks concerning the data transfer, it is proposed to
- download (dwl, DLU, DWLC) the data source data (DSCD) from of the data source (DSC),
- configure (cfg, DLU, CFGC) the data source data (DSCD) by packing the data source data (DSCD) with data source-related meta-information, encrypting the packed data source data (DSCD) and storing the configured data source data (DSCD) as transfer data for the transfer,
- onload (onl, DLU, ONLC) the stored transfer data onto a transfer-data-carrier (TFDC, NBDC, TFC) transferring the transfer data for an offload operation,
- offload (ofl, ULU, OFLC) the transfer data from the transfer-data-carrier (TFDC, NBDC, TFC),
- process (prc, ULU, PRCC) the offloaded transfer data by decrypting and unpacking the configured data source data (DSCD) and transforming the decrypted and unpacked data source data (DSCD) with the meta-information into data sink data (DSND) to execute a data source data-related transaction in the data sink (DSN),
- upload (upl, ULU, UPLC) the data sink data (DSND) to the data sink (DSN).

## Description

The invention refers to a method for transferring data between a data source and a data sink according to the preamble of claim 1 and a Data-Transfer-System for transferring data between a data source and a data sink according to the preamble of claim 10.

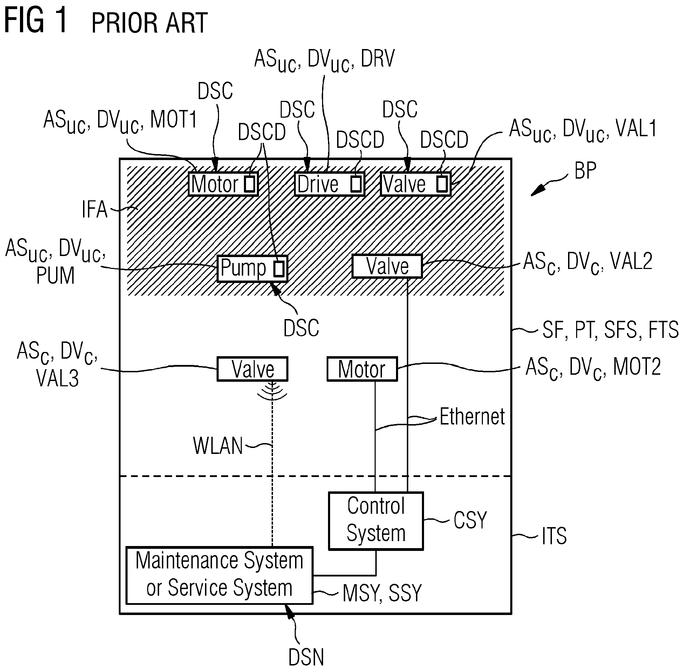

A typical, well-known example of the numerous ones being conceivable in the context of transferring data between a data source and a data sink is depicted in FIGURE 1 as state of the art and starting point of observation for the present invention.

FIGURE 1 shows a business premises BP, which can be formed preferably as a shop-floor SF, a plant PT, a shop-floor-site SFS or a factory site FTS each including an IT-System ITS as an electronical system processing data. Within the business premises BP and regarding the processing of data there could be in principle at least one data source DSC as the source of data and at least one data sink DSN as the entity for processing the data within the ITS-System, although in the FIGURE 1 only one data sink DSN is depicted. The at least one data source DSC being spread over the business premises BP are preferably assets or devices delivering data to be processed, while the one data sink DSN is preferably a maintenance system MSY or service system SSY processing the data. The assets or devices of the business premises BP are preferably two motors, a first motor MOT1 and a second motor MOT2, a drive DRV, a pump PUM and three valves, a first valve VAL1, a second valve VAL2 and a third valve VAL3.

From the listed assets or devices there are a first group, which are connected either directly or indirectly via a control system CSY of the IT-System ITS with the maintenance system MSY or service system SSY of the IT-System ITS, and a second group, which have no connection to the maintenance system MSY or service system SSY.

While the first group includes connected assets AS_{c} or devices DV_{c}, the second group includes unconnected assets AS_{uc} or devices DV_{uc}.

The connected assets AS_{c} or devices DV_{c} comprise the second valve VAL2, the third valve VAL3 and the second motor MOT2, wherein the second valve VAL2 and the second motor MOT2 are connected over a wired-based online-connection via the control system CSY with the maintenance system MSY or service system SSY. The third valve VAL3, however, is connected over a wireless-based online-connection with the maintenance system MSY or service system SSY.

Why are these assets or devices connected with the maintenance system MSY or service system SSY?

The connected assets AS_{c} or devices DV_{c}, like the cited valves VAL2, VAL3 and the cited motor MOT2, being installed in business premises, like factories, plants or buildings do not last forever and need to be maintained or replaced over time. There are existing for example three simple and well-known strategies to counteract this, however each with different drawbacks:
1. Run to failure: Use the asset until it fails. This will cause an unplanned outage with potential damage to other machines or people and impact on current production or contracts.
2. Regular maintenance: In order to avoid unplanned outages, the assets AS_{c} or devices DV_{c} can be maintained according to a maintenance plan (e.g. with regard to an internal combustion engine replace oil each 1000 operating hours or replace the engine after 10 years). Maintenance plans are typically designed to be "on the safe side". This means that the engine (asset or device) in principle could run longer but is maintained earlier. This leads to over-maintenance. Still there is a risk that the engine (asset or device) will break and cause an unplanned outage.
**3.** Condition Based Service <CBS>, sometimes also called as Condition Based Maintenance: CBS helps to reduce over-maintenance and potentially can uncover risks of the asset or device breaks early. For this reason detailed data about the asset or device and the operating condition needs to be present in order to feed an algorithm that is able to predict the next maintenance or failure. This algorithm is based on a "Condition Based Service or Condition Based Maintenance <CBS>"-data evaluation executed in the maintenance system MSY or service system SSY as the data sink DSN. Carrying out this CBS-strategy is called as "Condition Based Service or Condition Based Maintenance <CBS>"-scenario.

In the following the "Condition Based Service or Condition Based Maintenance <CBS>"-scenario (as the third strategy) will be observed in more detail according to the FIGURE 1 depicting the connections between the assets AS_{c} or devices DV_{c} and the maintenance system MSY or service system SSY.

To carry out the "Condition Based Service or Condition Based Maintenance <CBS>"-scenario it is necessary that the assets AS_{c} or devices DV_{c} need to provide their data to the maintenance system MSY or service system SSY running the predictive maintenance algorithm and thereby executing the "Condition Based Service or Condition Based Maintenance <CBS>"-data evaluation. The online-connection (wireless- or wired-based) via network protocols is the most convenient way, but expensive to realize as each asset requires in the case of the wired-based online-connection a separate cabling to a communication network (e.g. Ethernet-connection). So the wired-based online-connection between the second valve VAL2 or the second motor MOT2 and the maintenance system MSY or service system SSY via the control system CSY is thus for instance an Ethernet-connection.

The wireless-based online-connection - as depicted in the FIGURE 1 - between the third valve VAL3 and the maintenance system MSY or service system SSY has other drawbacks.

So, a wireless transmission over wide ranges (e.g. ranges above 20 meters) is typically not feasible because of
- high electromagnetic emissions of the assets or devices,
- interference influences caused e.g. by the electrical operation of the assets or devices being packed very densely in an area of operation and/or
- construction-related attenuation of a wireless signal.

The drawback according to the second mirror line might not apply fortunately for the depicted wireless-based online-connection between the third valve VAL3 with the maintenance system MSY or service system SSY and the drawback according to the first mirror line could be overcome for instance by a "Wireless Local Area Network <WLAN>"-connection.

Nevertheless, plenty of assets or devices are running without the possibility to apply convenient CBS-measures, because of a non-existing connection to the maintenance system MSY or service system SSY.

These assets or devices are the already mentioned unconnected assets AS_{uc} or devices DV_{uc} of the second group being called sometimes according to the "Condition Based Service or Condition Based Maintenance <CBS>"-scenario as "brownfield-assets or -devices". Now, these unconnected assets AS_{uc} or devices DV_{uc} should be observed in more detail in the extent of the present invention. For this purpose and because of their special invention-related interest they are called each more generally as the data source DSC.

This means that according to the FIGURE 1 the first motor MOT1, the drive DRV, the first valve VAL1 and the pump PUM are the remaining assets or devices, which belong to the second group and thus are unconnected assets AS_{uc} or devices DV_{uc} or more generally one data source DSC each. In each data source DSC respectively in the first motor MOT1, the drive DRV, the first valve VAL1 and the pump PUM there are data source data DSCD destined for the data sink DSN for executing the "Condition Based Service or the Condition Based Maintenance <CBS>"-data evaluation discussed and mentioned above.

These unconnected assets AS_{uc} or devices DV_{uc} having no connection to the maintenance system MSY or service system SSY as the data sink DSN are thus without any possibility to apply convenient CBS-measures, i.e. a data connection for the data transfer between the data source DSC and the data sink DSN is non-existing.

It is challenging against the background of the drawbacks with regard to the wired-based online-connection or the wireless-based online-connection to the maintenance system MSY or service system SSY discussed above to establish a data connection between the unconnected assets AS_{uc} or devices DV_{uc} as the data source DSC each and the maintenance system MSY or service system SSY as the data sink DSN. This applies in particular to the wireless-based online-connection between the unconnected assets AS_{uc} or devices DV_{uc} and the maintenance system MSY or service system SSY due to the discussed wireless-based online-connection drawbacks. Especially because according to the depiction in the FIGURE 1 the first motor MOT1, the drive DRV, the first valve VAL1 and the pump PUM are packed very densely in an area of operation for a wireless transmission over wide ranges (e.g. ranges above 20 meters), so that thereby an interference area IFA would arise.

This however is problematic for executing the "Condition Based Service or the Condition Based Maintenance <CBS>"-data evaluation based on a data transfer from the unconnected assets AS_{uc} or devices DV_{uc} to the maintenance system MSY or service system SSY

Nevertheless, to execute anyway the "Condition Based Service or the Condition Based Maintenance <CBS>"-data evaluation for the unconnected assets AS_{uc} or devices DV_{uc} a typical practice is to send a human to the unconnected assets AS_{uc} or devices DV_{uc}. The human can either protocol operation conditions in an operation sheet by reading local measures (e.g. regarding the first motor MOT1 as the data source by reading rpm-data, temperature-data, etc.) or by connecting a computer to a local diagnosis port in order to download diagnostic data.

This approach is time consuming and can't be realized in short time intervals (e.g. hourly).

In order to achieve a high-frequency data evaluation for the "Condition Based Service or the Condition Based Maintenance <CBS>" an online connection for the predictive maintenance algorithm implemented in the maintenance system MSY or service system SSY to the data DSCD of the unconnected assets AS_{uc} or devices DV_{uc} would be required.

It is an objective of the invention to propose a method and a Data-Transfer-System for transferring data between a data source and a data sink, by which the data transfer is enabled at least more or less online without the data source and the data sink are connected and without any of the discussed drawbacks concerning the data transfer.

This objective is solved with regard to a method defined in the preamble of claim 1 by the features in the characterizing part of claim 1.

The objective is further solved with regard to a Data-Transfer-System defined in the preamble of claim 10 by the features in the characterizing part of claim 10.

The main idea of the invention according to the claims 1 and 10 in order to transfer data source data of a data source being destined for the data sink, in particular for a "Condition Based Service or a Condition Based Maintenance <CBS>"-data evaluation executed in the data sink, from the data source to the data sink spaced from each other within a business premises, in particular a shop-floor, a plant, a shop-floor-site, a factory site etc. each including an IT-System, is to
- download the data source data from of the data source,
- configure the data source data by packing the data source data with data source-related meta-information, encrypting the packed data source data
[Remark: The encryption of the packed data for the data transfer is done due to the following reasons:
- Protection against stealing data from the transfer-data-carrier
- Protection against unauthorized access towards the data
- Protection against unwanted changes of the data to be transported (either caused by hardware issues or by manipulation). This data integrity is kept.]
   and storing the configured data source data as transfer data for the transfer,
- onload the stored transfer data (an onload operation) onto a transfer-data-carrier transferring the transfer data for an offload operation,
- offload the transfer data from the transfer-data-carrier,
- process the offloaded transfer data by decrypting and unpacking the configured data source data and transforming the decrypted and unpacked data source data with the meta-information into data sink data to execute a data source data-related transaction in the data sink,
- upload the data sink data to the data sink.

This is an offline data transfer of data source data of a data source being destined for the data sink, in particular to enable a "Condition Based Service or a Condition Based Maintenance <CBS>"-scenario.

The advantage of the proposed solution is that assets or devices being each the data source of the data (i) being destined for the data sink as the entity regarding a data evaluation, in particular executing predictive maintenance algorithm according to a "Condition Based Service or a Condition Based Maintenance <CBS>"-scenario, and (ii) accordingly being collected and transferred within the business premises don't need to be connected online to a communication network which
- Avoids costs for additional cablings and installation effort
- Increase security as attackers could not reach the asset via an online connection
- Increases flexibility as further assets or devices could be involved in a Data-Transfer-System over time individually

Additionally by allowing the preferred "Condition Based Service or a Condition Based Maintenance <CBS>"-scenario on the assets or devices has the following advantages
- Avoid over-maintenance and therefore decreases maintenance cost
- Uncovers potential asset failures early and avoids unplanned outages
- Safe the environment as assets can be used efficiently in their whole lifetime period which avoids production of new ones (i.e. less carbon-dioxide emissions, material demand, etc.)

The proposed solution has furthermore the following benefits:
- Brownfield enablement of existing assets to act in a connected world.
As an example: A typical chemical plant has roughly 1000 valves installed in the process. Only 500 of them are connected to a control system via a wire. This means half of the valves acting in the process without knowing the concrete actual state. It is too costly for the plant operator to connect them via wire or to send out personnel for regular checks. An automated solution would basically help tremendously to gain transparency and enable new use cases.
- Avoid over-maintenance of assets or devices and therefore decreases maintenance cost.
- Uncover potential asset or device failures early and avoid unplanned outages.
- Safe the environment as assets or devices can be used in their whole lifetime and doesn't need to be replaced with new ones (who would provide built-in connectivity)

Furthermore, the invention can be used advantageously in various scenarios. First and foremost, thereby referring to the claims 6 and 18, it should be mentioned and the invention with its underlying methodology and technology is preferably focused but not limited to the "Condition Based Service or Condition Based Maintenance <CBS>"-scenario discussed in the context of the FIGURE 1 in in the introductory part of the application.

Basically the same approach can be applied to any scenario that requires data from assets or devices as a data source that not needs to have a real-time access as it is the case when they are connected to a data sink performing the data evaluation.

So according to the claims 7 to 9 or 19 to 21 alternative scenarios are for example:
- (claims 7 and 19): A "displaying machine status"-scenario, e.g. in a "Supervisory Control and Data Acquisition <SCADA>"-environment, according to which within the business premises the data source is a dashboard and the data sink is a central monitoring station.
- (claims 8 and 20): An "Update Push"-scenario, such as updating firmware, configuration changes or non-real-time-critical commands, according to which within the business premises the data source is an update-database and the data sink is a device to be updated.
- (claims 9 and 21): A "data analytics"-scenario, according to which within the business premises the data source is a machine or device generating various kind of data to be analyzed and the data sink is a central location for running the analysis.

Independently from the cited scenarios, the invention can be applied to, the transfer data is onloaded onto the transfer-data-carrier as a transport medium between the onload and offload operation (which are carried out at different times) to overcome the spatial distance between the data source and the data sink and is offloaded from the transfer-data-carrier either - according to the claims 2 and 11 - preferably via a wireless data connection and this wireless data connection is in order to avoid the drawbacks regarding such a connection discussed in the introductory part of the application in particular a "Near Field Communication <NFC>"-connection or a "Bluetooth <BT>"-connection or a "Wireless Local Area Network <WLAN>"-connection or alternatively - according to the claims 3 and 12 - via a wired data connection such as a "Universal Serial Bus <USB>"-connection.

The transfer-data-carrier as the transport medium is - according to the claims 4 and 13 - preferably is a wireless device, such as a smartphone or a tablet (e.g. with each an Android- or iOS-operating system), assignable to a human or robot and thereby used for being carried along a walkway of the business premises between the data source and the data sink. Alternatively, it is also possible that the transfer-data-carrier is a drone to overcome the spatial distance between the data source and the data sink, which includes a wireless device.

A complete other way to overcome the spatial distance between the data source and the data sink is - according to the claims 4 and 15 - a Wireless-Mesh-Network with wireless cells, which are preferably based on "Wireless Local Area Network <WLAN>"-cells or "Bluetooth <BT>"-cells, wherein the wireless cells of the Wireless-Mesh-Network are set up by at least one Download-Unit and at least one Upload-Unit.

A frequent data transfer with a Data-Transfer-System (cf. claim 10) to apply any of the cited scenarios and especially the CBS-scenario on unconnected assets or devices is enabled by combining multiple aspects together:
- Identification or detection of a regular "visit" or pass-by of either a human such as service person or visitor, or a robot or a drone or an autonomous transport vehicle with the wireless device in the business premises serving as the transfer-data-carrier.
- Equip the human, the robot, the drone or the autonomous transport vehicle with the wireless device such as the smartphone or the tablet including a processor (a computing unit) with a local persistence or storage and a wireless transceiver as the transfer-data-carrier.
- Equip the data sources respectively the unconnected (offline) assets or devices with a Download-Unit including a wireless transmitter (sender) that sends operational data (data of operating conditions) and/or diagnostic data as data source data.
- Provide an Upload-Unit, e.g. a computer, a server or even an app on a notebook, where the human or robot can plug the wireless device and controlled by the computing unit its local persistence or storage gets emptied (the offload operation) and where the offloaded data is uploaded to the data sink respectively the maintenance system or service system executing the predictive maintenance algorithm.

The wireless transmitter (sender) of the Download-Unit broadcast the current operational data and/or diagnostic data. Whenever the human, the robot, the drone or the autonomous transport vehicle with the wireless device in the business premises serving as the transfer-data-carrier passes by it automatically receives the broadcasted data and stores the data in the local persistence or storage. The data on the with the wireless device can be cyclically offloaded and afterwards uploaded using the Upload-Unit, e.g. by
- the human regularly replaces the wireless device when passing by the Upload-Unit
- the human when finish working or changing the working shift
- the robot when coming back e.g. for charging

This approach allows to get the operational data and/or the diagnostic data to feed the predictive maintenance algorithm executed in the maintenance system or service system constantly with new data to enable the "Condition Based Service or the Condition Based Maintenance <CBS>"-scenario for the unconnected assets or devices.

The Data-Transfer-System according to the claim 10 can be configured either completely as a hardware-based System or advantageously in the course of digitization according to the claims 14 and 17 as a hardware- and software-based System the components included in the Download-Unit, the transfer-data-carrier and the Upload-Unit are formed as a computer-implemented-tool, which is preferably an APP and which when being uploaded is embedded into a custom software execution container. The custom software execution container is a technology of a software system to provide the access to hardware resources (i.e. CPU, RAM, Disk, I/O-interface) to a defined software process running inside a hosting (software) system such as a data source and/or a data sink. The access of a software process running in a container towards other processes running the hosting software system can be precisely controlled by the hosting software system. For the Data Transfer System the container can be realized by for example virtual machines (like VMware), container frameworks (like Docker) or operating system namespaces (like Linux Namespaces; used to partition resources to a software process). Such a container environment for the custom software execution is necessary as a prerequisite in case the software required by the Data Transfer System is to be provided as software-only-package provided by a Software Repository.

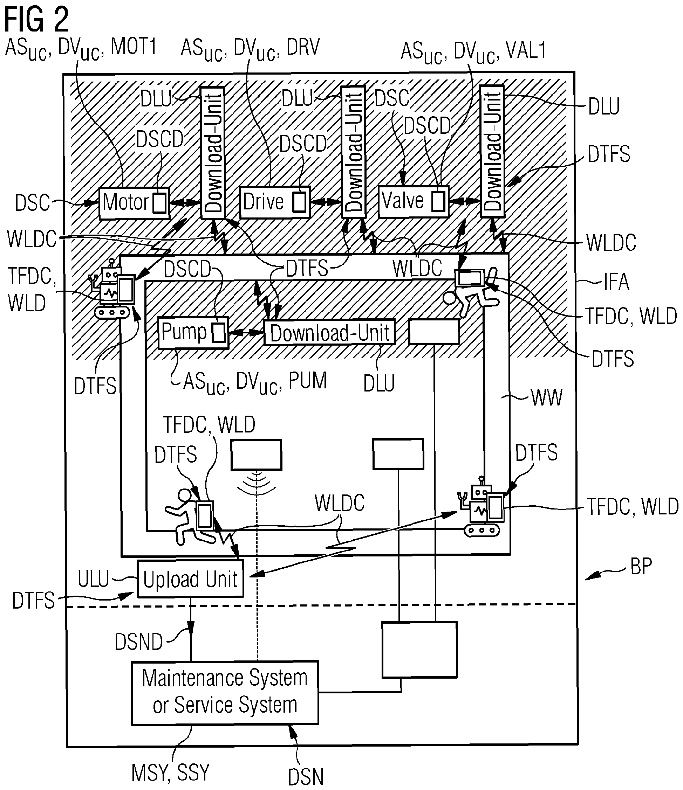

Moreover, advantageous further developments of the invention, based on the depiction in the FIGURE 1 with the corresponding explanations, arise out of the following description of a preferred embodiment of the invention according to FIGURES 2 to 8. They show:
FIGURE 2 based on the FIGURE 1 a Data-Transfer-System enabling the "Condition Based Service or the Condition Based Maintenance <CBS>"-scenario between the unconnected assets or devices each as the data source and the maintenance system or service system as the data sink,

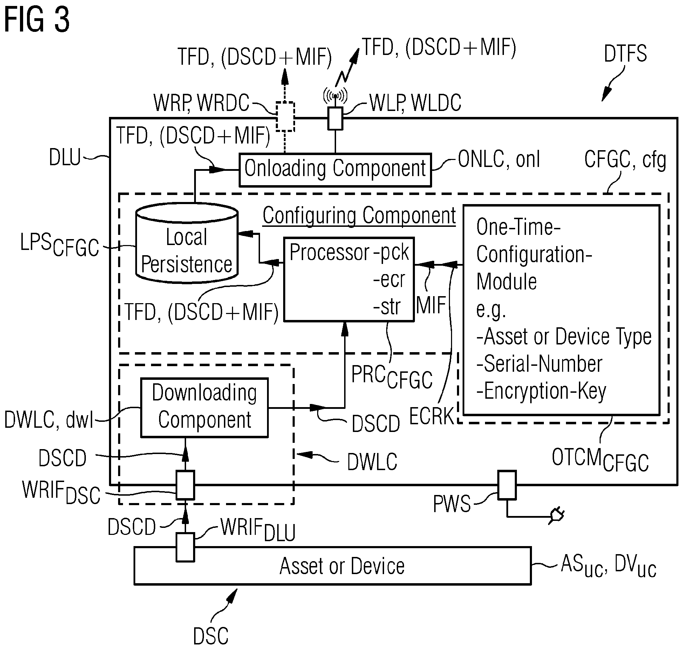

FIGURE 3 the structure of a Download-Unit as part of the Data-Transfer-System enabling the "Condition Based Service or the Condition Based Maintenance <CBS>"-scenario on the unconnected asset or device as the data source,

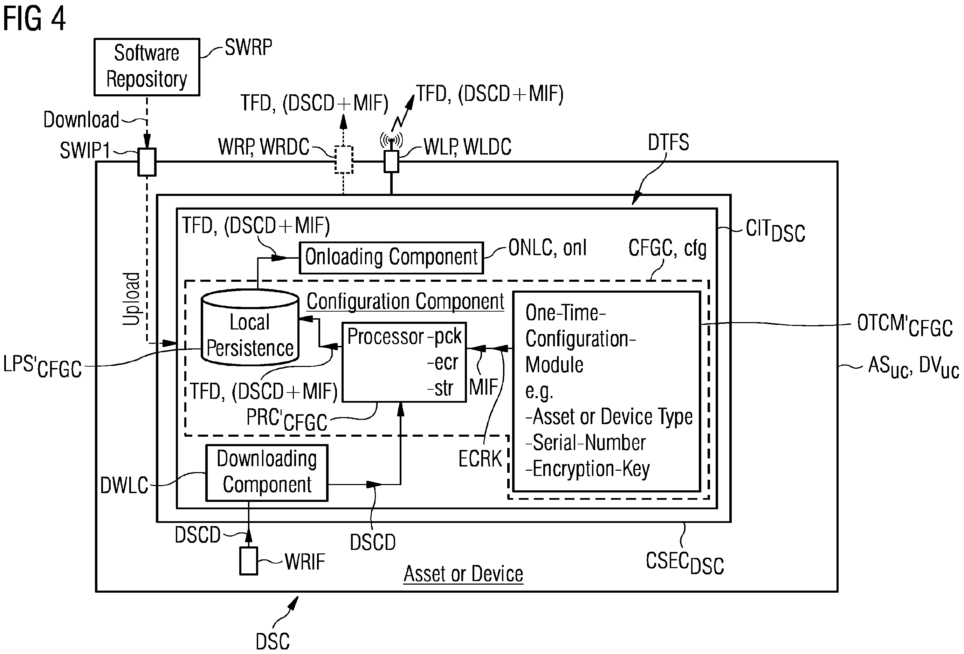

FIGURE 4 the configuration of a "data source"-related computer-implemented-tool replacing essentially the Download-Unit according to the FIGURE 3 as part of the Data-Transfer-System enabling the "Condition Based Service or the Condition Based Maintenance <CBS>"-scenario on the unconnected asset or device as the data source,

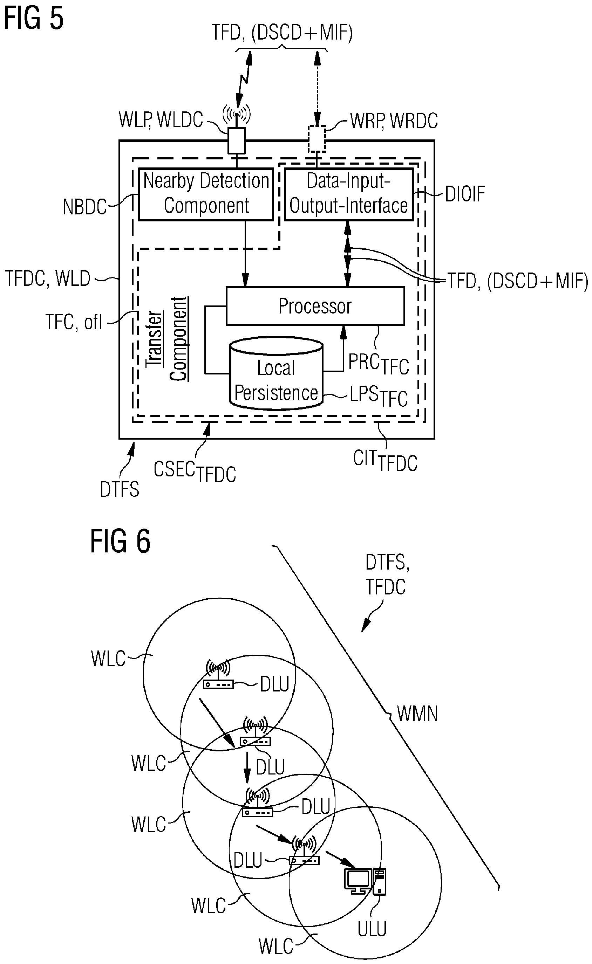

FIGURE 5 the structure of a transfer-data-carrier as part of the Data-Transfer-System enabling the "Condition Based Service or the Condition Based Maintenance <CBS>"-scenario on overcoming a spatial distance between the unconnected asset or device as the data source and the maintenance system or service system as the data sink,
FIGURE 6 the configuration of a mesh-scenario replacing the transfer-data-carrier according to the FIGURE 5 as part of the Data-Transfer-System enabling the "Condition Based Service or the Condition Based Maintenance <CBS>"-scenario on overcoming a spatial distance between the unconnected asset or device as the data source and the maintenance system or service system as the data sink.

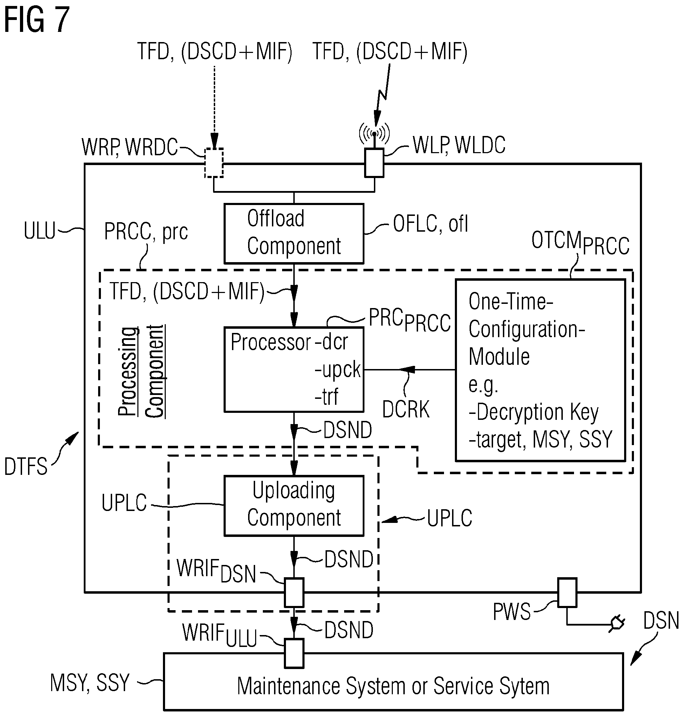

FIGURE 7 the structure of an Upload-Unit as part of the Data-Transfer-System enabling the "Condition Based Service or the Condition Based Maintenance <CBS>"-scenario on the maintenance system or service system as the data sink,

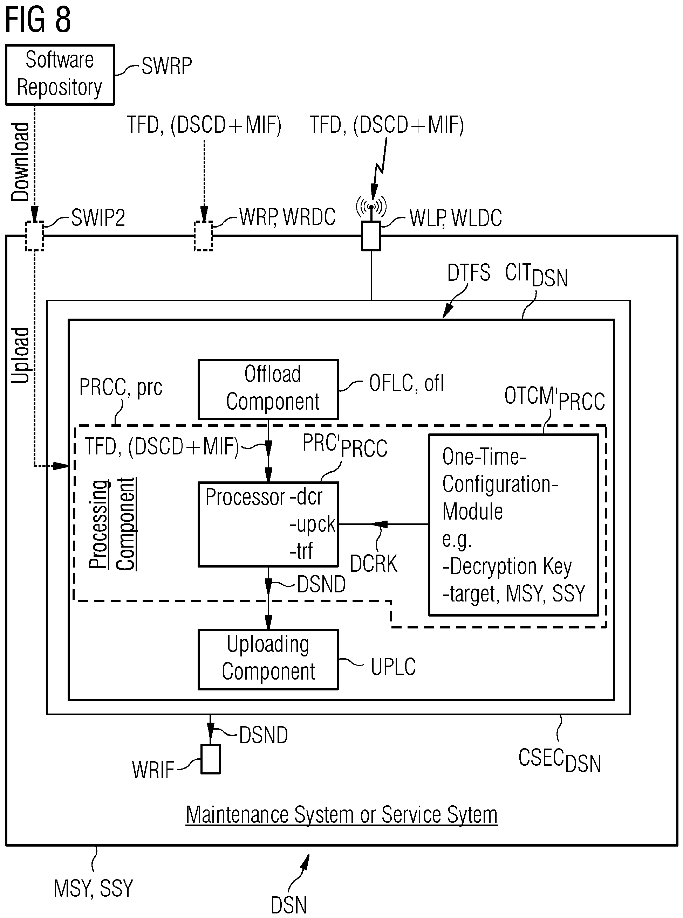

FIGURE 8 the configuration of a "data sink"-related computer-implemented-tool replacing essentially the Upload-Unit according to the FIGURE 5 as part of the Data-Transfer-System enabling the "Condition Based Service or the Condition Based Maintenance <CBS>"-scenario on the maintenance system or service system as the data sink.
FIGURE 2 shows based on the FIGURE 1 and its figure description a Data-Transfer-System DTFS enabling the "Condition Based Service or the Condition Based Maintenance <CBS>"-scenario between the unconnected assets AS_{uc} or devices DV_{uc} each as the data source DSC and the maintenance system MSY or service system SSY as the data sink DSN within the business premises BP. These unconnected assets AS_{uc} or devices DV_{uc} - called as "brownfield-assets or -devices" - are running without the possibility to apply convenient CBS-measures, because of a non-existing connection to the maintenance system MSY or service system SSY.

As according to the FIGURE 1 the first motor MOT1, the drive DRV, the first valve VAL1 and the pump PUM of the second group of assets or devices are the unconnected assets AS_{uc} or devices DV_{uc} or more generally one data source DSC each. In each data source DSC respectively in the first motor MOT1, the drive DRV, the first valve VAL1 and the pump PUM there are the data source data DSCD destined for the data sink DSN for executing the "Condition Based Service or the Condition Based Maintenance <CBS>"-data evaluation already discussed and mentioned by the description of the FIGURE 1.

The Data-Transfer-System DTFS is now provided to enable the unconnected assets AS_{uc} or devices DV_{uc} to have a data connection to the maintenance system MSY or service system SSY as the data sink DSN are thus they have the possibility to apply the convenient CBS-measures.

For this purpose the Data-Transfer-System DTFS includes first of all a Download-Unit DLU, which is wire-connected each with the unconnected asset AS_{uc} or device DV_{uc} and thus to the first motor MOT1, the drive DRV, the first valve VAL1 and the pump PUM of the second group of assets or devices respectively each to the data source DSC as the source of the data source data DSCD for downloading the data source data DSCD.

How this downloading is realized will be described later on according to the description of FIGURES 3 and 4.

At this point in the context of describing the FIGURE 2 it should be mentioned in advance that the Download-Unit DLU is being able to establish inter alia a wireless data connection WLDC (according the FIGURES 3 and 4 it will be seen that also a wired data connection is possible) within the Data-Transfer-System DTFS for enabling the "Condition Based Service or the Condition Based Maintenance <CBS>"-scenario. The wireless data connection WLDC is
(i) with regard to the explanations by describing the FIGURE 1 in the context of interference drawbacks caused e.g. by the electrical operation of the unconnected assets AS_{uc} or devices DV_{uc} and the Download-Unit DLU with the wireless data connection WLDC being packed very densely in an area of operation depicted in both figures, the FIGURE 1 and the FIGURE 2, as the interference area IFA and
(ii) with regard to the also discussed emission drawbacks of the unconnected assets AS_{uc} or devices DV_{uc} DV_{uc} and the Download-Unit DLU with the wireless data connection WLDC preferably a "Near Field Communication <NFC>"-connection or a "Bluetooth <BT>"-connection or a "Wireless Local Area Network <WLAN>"-connection.

Furthermore regarding the cited purpose the Data-Transfer-System DTFS includes an Upload-Unit ULU, which is wire-connected with the maintenance system MSY or service system SSY as the data sink DSN for uploading the data source data DSCD, when the data source data DSCD is transferred from the Download-Unit DLU to the Upload-Unit ULU.

Firstly, how this uploading is realized will be described later on according to the description of FIGURES 7 and 8.

Secondly, how the data transfer from the Download-Unit DLU to the Upload-Unit ULU is realized will be described next.

At this point in the context of describing the FIGURE 2 it should be mentioned in advance that also the Upload-Unit DLU is being able to establish inter alia the wireless data connection WLDC (according the FIGURES 7 and 8 it will be seen that also here a wired data connection is possible) within the Data-Transfer-System DTFS for enabling the "Condition Based Service or the Condition Based Maintenance <CBS>"-scenario. The wireless data connection WLDC is also here
(i) with regard to the explanations by describing the FIGURE 1 in the context of interference drawbacks of the maintenance system MSY or service system SSY and the Upload-Unit DLU with the wireless data connection WLDC and
(ii) with regard to the also discussed emission drawbacks of the maintenance system MSY or service system SSY and the Upload-Unit DLU with the wireless data connection WLDC preferably a "Near Field Communication <NFC>" or a "Bluetooth <BT>"-connection or a "Wireless Local Area Network <WLAN>"-connection.

Now, how the data transfer from the Download-Unit DLU to the Upload-Unit ULU is realized. For this purpose the Data-Transfer-System DTFS includes a transfer-data-carrier TFDC. The transfer-data-carrier TFDC is a wireless device WLD, which can be preferably a smartphone or a tablet and which is assigned to a human or robot and thereby used for being carried along a walkway WW of the business premises BP between the Download-Unit DLU respectively the data source DSC and the Upload-Unit ULU respectively the data sink DSN.

The human can be for instance a person of working or service staff working at the business premises.

At this point in the context of describing the FIGURE 2 it should be mentioned in advance that also the transfer-data-carrier TFDC due to the implementation as the wireless device WLD is being able to establish inter alia the wireless data connection WLDC (according the FIGURES 5 it will be seen that also a wired data connection is possible) within the Data-Transfer-System DTFS for enabling the "Condition Based Service or the Condition Based Maintenance <CBS>"-scenario, wherein the wireless data connection WLDC is also here preferably a "Near Field Communication <NFC>"-connection or a "Bluetooth <BT>"-connection or a "Wireless Local Area Network <WLAN>"-connection.

Due to this implementation the transfer-data-carrier TFDC as a transport medium between the Download-Unit DLU and the Upload-Unit ULU it is possible to overcome the spatial distance between the data source DSC and the data sink DSN respectively the Download-Unit DLU and the Upload-Unit ULU.

When the transfer-data-carrier TFDC is carried along the walkway WW and enters in a wireless distance to the Download-Unit DLU (i.e. the transfer-data-carrier TFDC comes round or passes the Download-Unit DLU and is in a transmission range to Download-Unit DLU) in the effective range of the wireless data connection WLDC, then it comes to an onload operation concerning the data transfer between the Download-Unit DLU and transfer-data-carrier TFDC.

Moreover when the transfer-data-carrier TFDC is carried further along the walkway WW and enters in a further or the same wireless distance to the Upload-Unit ULU (i.e. the transfer-data-carrier TFDC comes round or passes the Upload-Unit DLU and is in a further transmission range to the Upload-Unit DLU) in the effective range of the wireless data connection WLDC then it comes to an offload operation concerning the data transfer between the Upload-Unit DLU and transfer-data-carrier TFDC.

These onload and offload operations can be carried out as often as necessary, so for instance in regular time intervals, e.g. one hour or a day and they can be carried out quiet seamlessly.

Alternatively, to the human or robot carrying the wireless device it is also possible that a drone with the wireless device is used to overcome the spatial distance between the data source DSC and the data sink DSN respectively the Download-Unit DLU and the Upload-Unit ULU.

It is also possible to let multiple of those transfer-data-carrier run through the business premises. It is moreover possible to have multiple Upload-Units available in order to increase the chance of pass-by's of a walkway participant.

As soon as transfer-data-carrier has uploaded data packages to the Upload-Unit the data kept locally on the transfer-data-carrier gets deleted to free up disk space for the next data collection run.

The same thing happens at the Download-Unit connected with data source. So, as soon as the Download-Unit has onloaded data packages to the transfer-data-carrier the data kept locally on the Download-Unit gets deleted to free up disk space for the next data collection run
In the meantime new data source data could be recorded by the Download-Unit.

FIGURE 3 shows the structure of the Download-Unit DLU as part of the Data-Transfer-System DTFS being power supplied PWS and enabling the "Condition Based Service or the Condition Based Maintenance <CBS>"-scenario on the unconnected asset AS_{uc} or device DV_{uc} as the data source DSC.

As already mentioned (cf. FIGURE 2 with the corresponding description) the Download-Unit DLU is wire-connected with the unconnected asset AS_{uc} or device DV_{uc}. This wire-connection includes a "to data source"-related wired interface WRIF_{DSC} as part of the Download-Unit DLU and a "to download-unit"-related wired interface WRIF_{DLU} as part of the data source DSC.

Furthermore also already mentioned (cf. FIGURE 5 with the corresponding description) the Download-Unit DLU is being able to establish the wireless data connection WLDC. For establishing this wireless data connection WLDC the Download-Unit DLU includes at least one wireless port WLP, which according to the type of the wireless data connection WLDC is preferably at least one of a "Near Field Communication <NFC>"-port, a "Bluetooth <BT>"-port and a "Wireless Local Area Network <WLAN>"-port.

Alternatively to the established wireless data connection WLDC it is also possible that the Download-Unit DLU can establish a wired data connection WRDC, which is preferably a "Universal Serial Bus <USB>"-connection. For establishing this wired data connection WRDC the Download-Unit DLU includes a wired port WRP, which according to the type of the wired data connection WRDC is preferably a "Universal Serial Bus <USB>"-port.

Moreover to download the data source data DSCD from the unconnected asset AS_{uc} or device DV_{uc} and to enable the aforementioned onload operation the Download-Unit DLU includes a downloading component DWLC, a configuring component CFGC and an onload component ONLC.

These components form a functional unit to enable based on the data source data DSCD the cited onload operation.

First of all the downloading component DWLC downloads dwl via the wired interfaces WRIF_{DSC}, WRIF_{DLU} the data source data DSCD from of the data source DSC respectively the unconnected asset AS_{uc} or device DV_{uc}.

Then the downloaded data DSCD is passed to the configuring component CFGC for configuring cfg the data source data DSCD. For this purpose the configuring component CFGC includes a processor PRC_{CFGC}, a One-Time-Configuration-Module OTCM_{CFGC} and a local persistence LPS_{CFGC}, which functionally form the configuring component CFGC such that the downloaded data source data DSCD is passed to the processor PRC_{CFGC}, which
- packs pck the data with data source-related meta-information MIF received from the One-Time-Configuration-Module OTCM_{CFGC} to packed data DSCD+MIF,
- encrypts ecr the packed data DSCD+MIF by using an encryption key ECRK also received from the One-Time-Configuration-Module OTCM_{CFGC},
- stores str the packed data DSCD+MIF being encrypted as transfer data TFD in the local persistence LPS_{CFGC}.

The encryption of the packed data for the data transfer is done due to the following reasons:
- Protection against stealing data from the transfer-data-carrier
- Protection against unauthorized access towards the data
- Protection against unwanted changes of the data to be transported (either caused by hardware issues or by manipulation). Thus data integrity is kept.

Finally the onload component ONLC onloads onl by accessing the stored transfer data TFD and by therefore using the wireless port WLP or alternatively the wired port WRP for the cited onload operation by which according to FIGURE 5 the transfer data TFD is onloaded to the transfer-data-carrier.

FIGURE 4 shows the configuration of a "data source"-related computer-implemented-tool CIT_{DSC} replacing essentially the Download-Unit DLU according to the FIGURE 3 as part of the Data-Transfer-System DTFS enabling the "Condition Based Service or the Condition Based Maintenance <CBS>"-scenario on the unconnected asset AS_{uc} or device DV_{uc} as the data source DSC.

The "data source"-related computer-implemented-tool CIT_{DSC} replacing essentially the Download-Unit DLU takes over the tasks of the downloading component DWLC, the configuring component CFGC and the onload component ONLC carried out in the the Download-Unit DLU, while the wired interfaces WRIF_{DSC}, WRIF_{DLU} used for the DSCD-download are replaced by one wired interface WRIF, which as part of the unconnected asset AS_{uc} or device DV_{uc} respectively the data source DSC is assigned to a "data source"-provided custom software execution container CSEC_{DSC} on the unconnected asset AS_{uc} or device DV_{uc} respectively the data source DSC.

The same happened to the wireless port WLP and the optionally used wired port WRP used for the TFD-onload, which again as part of the unconnected asset AS_{uc} or device DV_{uc} respectively the data source DSC are also assigned to the "data source"-provided custom software execution container CSEC_{DSC} on the unconnected asset AS_{uc} or device DV_{uc} respectively the data source DSC.

The "data source"-provided custom software execution container CSEC_{DSC} is a technology of a software system to provide the access to hardware resources (i.e. CPU, RAM, Disk, I/O-interface) to a defined software process running inside a hosting (software) system such as the unconnected asset AS_{uc} or device DV_{uc} respectively the data source DSC. The access of a software process running in a container towards other processes running the hosting (software system) can be precisely controlled by the hosting (software) system. For the Data Transfer System the container can be realized by for example virtual machines (like VMware), container frameworks (like Docker) or operating system namespaces (like Linux Namespaces; used to partition resources to a software process). Such a container environment for the custom software execution is necessary as a prerequisite in case the software required by the Data Transfer System is to be provided as software-only-package provided by a Software Repository.

The "data source"-related computer-implemented-tool CIT_{DSC} is preferably an APP and which when being uploaded via a first software-interface-port SWIP1 as part of the unconnected asset AS_{uc} or device DV_{uc} respectively the data source DSC from a software repository SWRP is embedded into the "data source"-provided custom software execution container CSEC_{DSC}.

Being embedded in the "data source"-provided custom software execution container CSEC_{DSC} the "data source"-related computer-implemented-tool CIT_{DSC} is used - by taking over the cited component tasks of the Download-Unit DLU - to download the data source data DSCD from the unconnected asset AS_{uc} or device DV_{uc} and to enable the aforementioned onload operation.

Now, the "data source"-related computer-implemented-tool CIT_{DSC} forms the functional unit to enable based on the data source data DSCD the cited onload operation.

First of all within the "data source"-related computer-implemented-tool CIT_{DSC} the downloading component DWLC downloads dwl via the wired interfaces WRIF the data source data DSCD from of the data source DSC respectively the unconnected asset AS_{uc} or device DV_{uc}.

Then within the "data source"-related computer-implemented-tool CIT_{DSC} the downloaded data DSCD is passed to the configuring component CFGC for configuring cfg the data source data DSCD. For this purpose the configuring component CFGC of the the "data source"-related computer-implemented-tool CIT_{DSC} includes a processor PRC'_{CFGC}, a One-Time-Configuration-Module OTCM' _{CFGC} and a local persistence LPS' _{CFGC}, which functionally form the configuring component CFGC of the "data source"-related computer-implemented-tool CIT_{DSC} such that the downloaded data source data DSCD is passed to the processor PRC' _{CFGC}, which
- packs pck the data with data source-related meta-information MIF received from the One-Time-Configuration-Module OTCM'_{CFGC} to packed data DSCD+MIF,
- encrypts ecr the packed data DSCD+MIF by using an encryption key ECRK also received from One-Time-Configuration-Module OTCM' _{CFGC},
- stores str the packed data DSCD+MIF being encrypted as transfer data TFD in the local persistence LPS'_{CFGC}.

Finally within the "data source"-related computer-implemented-tool CIT_{DSC} the onload component ONLC onloads onl by accessing the stored transfer data TFD and by therefore using the wireless port WLP or alternatively the wired port WRP for the cited onload operation by which according to FIGURE 5 the transfer data TFD is onloaded to the transfer-data-carrier.

FIGURE 5 shows the structure of a transfer-data-carrier TFDC as part of the Data-Transfer-System DTFS enabling the "Condition Based Service or the Condition Based Maintenance <CBS>"-scenario on overcoming a spatial distance between the unconnected asset AS_{uc} or device DV_{uc} as the data source DSC and the maintenance system MSY or service system SSY as the data sink DSN.

As already mentioned (cf. FIGURE 2 with the corresponding description) the transfer-data-carrier TFDC due to its implementation as wireless device WLD is being able to establish the wireless data connection WLDC. For establishing this wireless data connection WLDC the wireless device WLD of the transfer-data-carrier TFDC includes at least one wireless port WLP, which according to the type of the wireless data connection WLDC is preferably at least one of a "Near Field Communication <NFC>"-port, a "Bluetooth <BT>"-port and a "Wireless Local Area Network <WLAN>"-port.

Alternatively to the established wireless data connection WLDC it is also possible that the transfer-data-carrier TFDC can establish a wired data connection WRDC, which is preferably a "Universal Serial Bus <USB>"-connection. For establishing this wired data connection WRDC the transfer-data-carrier TFDC includes a wired port WRP, which according to the type of the wired data connection WRDC is preferably a "Universal Serial Bus <USB>"-port.

Moreover to enable the aforementioned (cf. FIGURE 2 with the corresponding description) onload operation and offload operation the transfer-data-carrier TFDC includes a nearby detection component NBDC and a transfer component TFC.

These components form a functional unit to enable the onload operation and the offload operation.

First of all the nearby detection component NBDC detects when the transfer-data-carrier TFDC is in a transmission range (cf. FIGURE 2 with the corresponding description) to the Download-Unit DLU for receiving the stored transfer data TFD from the Download-Unit DLU to enable the onload operation.

Then, as soon as the transfer-data-carrier TFDC is in the transmission range to the Download-Unit DLU, the onload operation happens and the onloaded transfer data TFD is passed via the wireless port WLP or alternatively the wired port WRP to the transfer component TFC for the later on offload operation (cf. FIGURE 2 with the corresponding description).

For this purpose the transfer component TFC includes a processor PRC_{TFC}, a Data-Input-Output-Interface DIOIF and a local persistence LPS_{TFC}, which functionally form the transfer component TFC such that the onloaded transfer data TFD is passed from the wireless port WLP or alternatively the wired port WRP over the Data-Input-Output-Interface DIOIF to the processor PRC_{TFC}, which temporary stores the onloaded transfer data TFD in local persistence LPS_{TFC} for the for the later on offload operation, while the transfer-data-carrier TFDC is carried along the walkway in direction to the data sink respectively the maintenance system or service system (cf. FIGURE 2 with the corresponding description).

Now, the nearby detection component NBDC detects when the offload operation can be carried out as soon as the transfer-data-carrier TFDC is in a further transmission range (cf. FIGURE 2 with the corresponding description) to the Upload-Unit ULU, so that the Upload-Unit ULU can receive the transfer data TFD stored in local persistence LPS_{TFC} of the transfer component TFC to enable the offload operation.

The nearby detection works preferably such that in regular cycles (i.e. 100ms) a broadcast-signal is sent out with the request of an answer of Download-Unit or Upload-Unit. If the Download-Unit or Upload-Unit answers, the nearby detection activates processor PRC_{TFC} to enable the onload operation or the offload operation.

Also (cf. FIGURE 4 regarding the Download-Unit and FIGURE 8 2 each with the corresponding description) with regard to the transfer-data-carrier TFDC it is possible that the nearby detection component NBDC and the transfer component TFC of the transfer-data-carrier TFDC are formed as a "transfer-data-carrier"-related computer-implemented-tool CIT_{TFDC}, which when being assigned to the transfer-data-carrier TFDC by an upload of the "transfer-data-carrier"-related computer-implemented-tool CIT_{TFDC} and thus embedded into a "transfer-data-carrier"-provided custom software execution container CSEC_{TFDC} uses either the wireless port WLP or the wired port WRP of the wireless device WLD for receiving the transfer data TFD and carrying out the offload operation for offloading the transfer data TFD.

FIGURE 6 shows the configuration of a mesh-scenario replacing the transfer-data-carrier TFDC according to the FIGURE 5 as part of the Data-Transfer-System DTFS enabling the "Condition Based Service or the Condition Based Maintenance <CBS>"-scenario on overcoming a spatial distance between the unconnected asset or device as the data source and the maintenance system or service system as the data sink. The transfer-data-carrier TFDC is a Wireless-Mesh-Network WMN with wireless cells WLC, which are preferably based on "Wireless Local Area Network <WLAN>"-cells or "Bluetooth <BT>"-cells and wherein the wireless cells WLC of the Wireless-Mesh-Network WMN are set up by at least one Download-Unit DLU and at least one Upload-Unit ULU.

FIGURE 7 shows the structure of the Upload-Unit ULU as part of the Data-Transfer-System DTFS being power supplied PWS and enabling the "Condition Based Service or the Condition Based Maintenance <CBS>"-scenario on the maintenance system MSY or service system SSY as the data sink DSN.

As already mentioned (cf. FIGURE 2 with the corresponding description) the Upload-Unit ULU is wire-connected with the maintenance system MSY or service system SSY. This wire-connection includes a "to data sink"-related wired interface WRIF_{DSN} as part of the Upload-Unit DLU and a "to upload-unit"-related wired interface WRIF_{ULU} as part of the data sink DSN.

Furthermore also already mentioned (cf. FIGURE 2 with the corresponding description) the Upload-Unit ULU is being able to establish the wireless data connection WLDC. For establishing this wireless data connection WLDC the Upload-Unit ULU includes at least one wireless port WLP, which according to the type of the wireless data connection WLDC is preferably at least one of a "Near Field Communication <NFC>"-port, a "Bluetooth <BT>"-port and a "Wireless Local Area Network <WLAN>"-port.

Alternatively to the established wireless data connection WLDC it is also possible that the Upload-Unit DLU can establish a wired data connection WRDC, which is preferably a "Universal Serial Bus <USB>"-connection. For establishing this wired data connection WRDC the Upload-Unit DLU includes a wired port WRP, which according to the type of the wired data connection WRDC is preferably a "Universal Serial Bus <USB>"-port.

Moreover to enable the aforementioned offload operation and to upload the data sink data DSND to the maintenance system MSY or service system SSY the Upload-Unit ULU includes an offload component OFLC, a processing component PRC_{C} and an uploading component UPLC.

These components form a functional unit to enable based on the offload operation the cited upload of the data sink data DSND.

First of all the offload component OFLC, when according to the detection of the nearby detection component (cf. FIGURE 5 with the corresponding description) the Upload-Unit ULU is in the further transmission range to the transfer-data-carrier (cf. FIGURE 2 with the corresponding description), receives via the wireless port WLP or alternatively the wired port WRP the transfer data TFD for carrying out ofl the cited offload operation.

Then the offloaded transfer data TFD is passed to the processing component PRCC for processing prc the transfer data TFD. For this purpose the processing component PRCC includes a processor PRC_{PRCC} and a One-Time-Configuration-Module OTCM_{CFGC}, which functionally form the processing component PRCC such that the offloaded transfer data TFD is passed to the processor PRC_{CFGC}, which
- decrypts dcr the transfer data TFD by using a decryption key DCRK received from the One-Time-Configuration-Module OTCM_{PRCC},
- unpacks upck the decrypted transfer data TFD with the data source-related meta-information MIF,
- transforms trf the decrypted and unpacked data source data DSCD with the meta-information MIF into the data sink data DSND to execute a data source data-related transaction in the data sink (DSN).

Finally the upload component UPLC uploads upl via the wired interfaces WRIF_{DSN}, WRIF_{ULU} the data sink data DSND to the data sink DSN respectively the maintenance system MSY or service system SSY.

FIGURE 8 shows the configuration of a "data sink"-related computer-implemented-tool CIT_{DSN} replacing essentially the Upload-Unit ULU according to the FIGURE 7 as part of the Data-Transfer-System DTFS enabling the "Condition Based Service or the Condition Based Maintenance <CBS>"-scenario on the maintenance system MSY or service system SSY as the data sink DSN.

The "data sink"-related computer-implemented-tool CIT_{DSN} replacing essentially the Upload-Unit ULU takes over the tasks of the offload component OFLC, the processing component PRC_{C} and the uploading component UPLC carried out in the the Upload-Unit ULU, while the wired interfaces WRIF_{DSN}, WRIF_{ULU} used for the DSND-upload are replaced by one wired interface WRIF, which as part of the maintenance system MSY or service system SSY respectively the data sink DSN is assigned to a "data sink"-provided custom software execution container CSEC_{DSN} on the maintenance system MSY or service system SSY respectively the data sink DSN.

The same happened to the wireless port WLP and the optionally used wired port WRP used for the offload operation of the transfer data TFD, which again as part of the maintenance system MSY or service system SSY respectively the data sink DSN are also assigned to the "data source"-provided custom software execution container CSEC_{DSC} on the maintenance system MSY or service system SSY respectively the data sink DSN.

The "data sink"-provided custom software execution container CSEC_{DSN} is also a technology of a software system to provide the access to hardware resources (i.e. CPU, RAM, Disk, I/O-interface) to a defined software process running inside a hosting (software) system such as the maintenance system MSY or service system SSY respectively the data sink DSN. The access of a software process running in a container towards other processes running the hosting (software system) can be precisely controlled by the hosting (software) system. For the Data Transfer System the container can be realized by for example virtual machines (like VMware), container frameworks (like Docker) or operating system namespaces (like Linux Namespaces; used to partition resources to a software process). Such a container environment for the custom software execution is necessary as a prerequisite in case the software required by the Data Transfer System is to be provided as software-only-package provided by a Software Repository.

The "data sink"-related computer-implemented-tool CIT_{DSN} is also preferably an APP and which when being uploaded via a second software-interface-port SWIP2 as part of the maintenance system MSY or service system SSY respectively the data sink DSN from a software repository SWRP is embedded into the "data sink"-provided custom software execution container CSEC_{DSN}.

Being embedded in the "data sink"-provided custom software execution container CSEC_{DSN} the "data source"-related computer-implemented-tool CIT_{DSN} is used - by taking over the cited component tasks of the Upload-Unit ULU - to enable based on the cited offload operation the cited upload of the data sink data DSND to the maintenance system MSY or service system SSY respectively the data sink DSN.

Now, the "data sink"-related computer-implemented-tool CIT_{DSN} forms the functional unit to enable based on the cited offload operation the cited upload of the data sink data DSND.

First of all within the the "data sink"-related computer-implemented-tool CIT_{DSN} the offload component OFLC, when according to the detection of the nearby detection component (cf. FIGURE 5 with the corresponding description) the Upload-Unit ULU is in the further transmission range to the transfer-data-carrier (cf. FIGURE 2 with the corresponding description), receives via the wireless port WLP or alternatively the wired port WRP the transfer data TFD for carrying out ofl the cited offload operation.

Then the offloaded transfer data TFD is passed to the processing component PRCC for processing prc the transfer data TFD. For this purpose the processing component PRCC of the the "data sink"-related computer-implemented-tool CIT_{DSN} includes a processor PRC'_{PRCC} and a One-Time-Configuration-Module OTCM'_{CFGC}, which functionally form the processing component PRCC of the the "data sink"-related computer-implemented-tool CIT_{DSN} such that the offloaded transfer data TFD is passed to the processor PRC'_{CFGC}, which
- decrypts dcr the transfer data TFD by using a decryption key DCRK received from the One-Time-Configuration-Module OTCM' _{PRCC},
- unpacks upck the decrypted transfer data TFD with the data source-related meta-information MIF,
- transforms trf the decrypted and unpacked data source data DSCD with the meta-information MIF into the data sink data DSND to execute a data source data-related transaction in the data sink (DSN).

Finally within the "data sink"-related computer-implemented-tool CIT_{DSN} the upload component UPLC uploads upl via the wired interfaces WRIF_{DSN}, WRIF_{ULU} the data sink data DSND to the data sink DSN respectively the maintenance system MSY or service system SSY.

## Claims

1. Method for transferring data between a data source (DSC) and a data sink (DSN), by which
- the data source (DSC) and the data sink (DSN) are spaced from each other within a business premises (BP), in particular a shop-floor (SF), a plant (PT), a shop-floor-site (SFS), a factory site (FTS) etc. each including an IT-System (ITS),
- in the data source (DSC) there are data source data (DSCD) destined for the data sink (DSN), in particular for a "Condition Based Service or a Condition Based Maintenance <CBS>"-data evaluation executed in the data sink (DSN), and
- a data connection for the data transfer between the data source (DSC) and the data sink (DSN) is non-existing,
**characterized by**
**a**) downloading (dwl) the data source data (DSCD) from of the data source (DSC),
**b**) configuring (cfg) the data source data (DSCD) by packing (pck) the data source data (DSCD) with data source-related meta-information (MIF), encrypting (ecr, ECRK) the packed data source data (DSCD) and storing (str) the configured data source data (DSCD) as transfer data (TFD) for the transfer,
**c**) onloading (onl) the stored transfer data (TFD) onto a transfer-data-carrier (TFDC) transferring the transfer data (TFD) for an offload operation,
**d**) offloading (ofl) the transfer data (TFD) from the transfer-data-carrier (TFDC),
**e**) processing (prc) the offloaded transfer data (TFD) by decrypting (dcr, DRCK) and unpacking (upck) the configured data source data (DSCD) and transforming (trf) the decrypted and unpacked data source data (DSCD) with the meta-information (MIF) into data sink data (DSND) to execute a data source data-related transaction in the data sink (DSN),
**f**) uploading (upl) the data sink data (DSND) to the data sink (DSN).

2. Method according to claim 1, **characterized in that** the transfer data (TFD) is onloaded (onl) and offloaded (ofl) via a wireless data connection (WLDC), in particular via a "Near Field Communication <NFC>"-connection or a "Bluetooth <BT>"-connection or a "Wireless Local Area Network <WLAN>"-connection.

3. Method according to claim 1, **characterized in that** the transfer data (TFD) is onloaded (onl) and offloaded (ofl) via a wired data connection (WRDC), in particular via a "Universal Serial Bus <USB>"-connection.

4. Method according to one of the claims 1 to 3, **characterized in that** the transfer-data-carrier (TFDC) is either a wireless device (WLD), in particular a smartphone or a tablet, assignable to a human or robot and thereby used for being carried along a walkway (WW) of the business premises (BP) between the data source (DSC) and the data sink (DSN), or a drone to overcome a spatial distance between the data source (DSC) and the data sink (DSN), which includes a wireless device (WLD).

5. Method according to claim 1 and 2, **characterized in that**
the transfer-data-carrier (TFDC) is a Wireless-Mesh-Network (WMN) with wireless cells (WLC), in particular based on "Wireless Local Area Network <WLAN>"-cells or "Bluetooth <BT>"-cells.

6. Method according to one of the claims 1 to 5, **characterized by**
a "Condition Based Service or a Condition Based Maintenance <CBS>"-scenario according to which within the business premises (BP) the data source (DSC) is an asset (AS) or device (DV), such as a motor (MOT), a drive (DRV), a valve (VAL), a pump (PUM), etc., and the data sink (DSN) is a maintenance system (MSY) or service system (SSY).

7. Method according to one of the claims 1 to 5, **characterized by**
a "displaying machine status"-scenario, in particular in a "Supervisory Control and Data Acquisition <SCADA>"-environment, according to which within the business premises (BP) the data source (DSC) is a dashboard and the data sink (DSN) is a central monitoring station.

8. Method according to one of the claims 1 to 5, **characterized by**
an "Update Push"-scenario, in particular updating firmware, configuration changes or non-real-time-critical commands, according to which within the business premises (BP) the data source (DSC) is an update-database and the data sink (DSN) is a device to be updated.

9. Method according to one of the claims 1 to 5, **characterized by**
a "data analytics"-scenario, according to which within the business premises (BP) the data source (DSC) is a machine or device generating various kind of data to be analyzed and the data sink (DSN) is a central location for running the analysis.

10. Data-Transfer-System (DTFS) for transferring data between a data source (DSC) and a data sink (DSN), by which
- the data source (DSC) and the data sink (DSN) are spaced from each other within a business premises (BP), in particular a shop-floor (SF), a plant (PT), a shop-floor-site(SFS), a factory site (FTS) etc. each including an IT-System (ITS),
- in the data source (DSC) there are data source data (DSCD) destined for the data sink (DSN), in particular for a "Condition Based Service or a Condition Based Maintenance <CBS>"-data evaluation executed in the data sink (DSN), and
- a data connection for the data transfer between the data source (DSC) and the data sink (DSN) is non-existing,
**characterized by**
**a)** a Download-Unit (DLU) including
**a1**) a downloading component (DWLC) for downloading (dwl) the data source data (DSCD) from of the data source (DSC),
**a2**) a configuring component (CFGC) for configuring (cfg) the data source data (DSCD) by packing (pck) the data source data (DSCD) with data source-related meta-information (MIF), encrypting (ecr, ECRK) the packed data source data (DSCD) and storing (str) the configured data source data (DSCD) as transfer data (TFD) for the transfer,
**a3**) an onload component (ONLC) for onloading (onl) the stored transfer data (TFD),
**b**) a transfer-data-carrier (TFDC) including
**b1**) a nearby detection component (NBDC) for detecting when the transfer-data-carrier (TFDC) is in a transmission range to the Download-Unit (DLU) for receiving the stored transfer data (TFD) from the Download-Unit (DLU),
**b2**) a transfer component (TFC) to receive the onloaded transfer data (TFD) on the transfer-data-carrier (TFDC) and to offload (ofl) the transfer data (TFD) for an offload operation from the transfer-data-carrier (TFDC),
**b3**) the nearby detection component (NBDC) for detecting when the offload operation can be carried out,
**c**) an Upload-Unit (ULU) including
**c1**) an offload component (OFLC) to receive the transfer data (TFD) when according to the detection of the nearby detection component (NBDC) the Upload-Unit (ULU) is in a further transmission range to the transfer-data-carrier (TFDC) for carrying out the offload operation,
**c2**) a processing component (PRCC) for processing (prc) the offloaded transfer data (TFD) by decrypting (dcr, DRCK) and unpacking (upck) the configured data source data (DSCD) and transforming (trf) the decrypted and unpacked data source data (DSCD) with the meta-information (MIF) into data sink data (DSND) to execute a data source data-related transaction in the data sink (DSN),
**c3**) an uploading component (UPLC) for uploading (upl) the data sink data (DSND) to the data sink (DSN).

11. Data-Transfer-System (DTFS) according to claim 10, **characterized in that**
the Download-Unit (DLU) and the Upload-Unit (ULU) include each at least one wireless port (WLP), in particular at least one of a "Near Field Communication <NFC>"-port, a "Bluetooth <BT>"-port and a "Wireless Local Area Network <WLAN>"-port, wherein the onload component (ONLC) and the offload component (OFLC) use the wireless ports (WLP) for onloading (onl) and offloading (ofl) the transfer data (TFD) according to a wireless data connection (WLDC), in particular a "Near Field Communication <NFC>"-connection or a "Bluetooth <BT>"-connection or a "Wireless Local Area Network <WLAN>"-connection.

12. Data-Transfer-System (DTFS) according to claim 10, **characterized in that**
the Download-Unit (DLU) and the Upload-Unit (ULU) include each a wired port (WRP), in particular an "Universal Serial Bus <USB>"-port, wherein the onload component (ONLC) and the offload component (OFLC) use the wired ports (WRP) for onloading (onl) and offloading (ofl) the transfer data (TFD) according to a wired data connection (WRDC), in particular a "Universal Serial Bus <USB>"-connection.

13. Data-Transfer-System (DTFS) according to one of the claims 10 to 12, **characterized in that** the transfer-data-carrier (TFDC) is either a wireless device (WLD), in particular a smartphone or a tablet, assignable to a human or robot and thereby used for being carried along a walkway (WW) of the business premises (BP) between the data source (DSC) and the data sink (DSN), or a drone to overcome a spatial distance between the data source (DSC) and the data sink (DSN), which includes a wireless device (WLD), wherein the wireless device (WLD) includes
- at least one wireless port (WLP), in particular at least one of a "Near Field Communication <NFC>"-port, a "Bluetooth <BT>"-port and a "Wireless Local Area Network <WLAN>"-port, or
- at least one wireless port (WLP), in particular at least one of a "Near Field Communication <NFC>"-port, a "Bluetooth <BT>"-port and a "Wireless Local Area Network <WLAN>"-port and a wired port (WRP), in particular a "Universal Serial Bus <USB>"-port, such that
-- the nearby detection component (NBDC) uses the wireless port (WLP) either for detecting when the transfer-data-carrier (TFDC) is in the transmission range to the Download-Unit (DLU) or for detecting when the transfer-data-carrier (TFDC) is in the further transmission range to the Upload-Unit (ULU) and
-- the transfer component (TFC) uses either the wireless port (WLP) or the wired port (WRP) for receiving the transfer data (TFD) and the offload operation for offloading the transfer data (TFD).

14. Data-Transfer-System (DTFS) according to one of the claims 10 to 13, **characterized in that**
the nearby detection component (NBDC) and the transfer component (TFC) of the transfer-data-carrier (TFDC) are formed as a "transfer-data-carrier"-related computer-implemented-tool (CIT_{TFDC}), which when being assigned to the transfer-data-carrier (TFDC) by an upload of the "transfer-data-carrier"-related computer-implemented-tool (CIT_{TFDC}) and thus embedded into a "transfer-data-carrier"-provided custom software execution container (CSEC_{TFDC}) uses either the wireless port (WLP) or the wired port (WRP) of the wireless device (WLD) for receiving the transfer data (TFD) and the offload operation for offloading the transfer data (TFD).

15. Data-Transfer-System (DTFS) according to claim 10 and 11, **characterized in that**
the transfer-data-carrier (TFDC) is a Wireless-Mesh-Network (WMN) with wireless cells (WLC), in particular based on "Wireless Local Area Network <WLAN>"-cells or "Bluetooth <BT>"-cells, wherein the wireless cells (WLC) of the Wireless-Mesh-Network (WMN) are set up by at least one Download-Unit (DLU) and at least one Upload-Unit (ULU).

16. Data-Transfer-System (DTFS) according to one of the claims 10 to 15, **characterized in that**
the downloading component (DWLC) includes a wired data source interface (WRIF_{DSC}) to the data source (DSC) and the uploading component (UPLC) includes a wired data sink interface (WRIF_{DSN}) to the data sink (DSN) .

17. Data-Transfer-System (DTFS) according to claim 10, **characterized in that**
- the downloading component (DWLC), the configuring component (CFGC) and the onload component (ONLC) of the Download-Unit (DLU) are formed as a "data source"-related computer-implemented-tool (CIT_{DSC}), which when being assigned to the data source (DSC) by an upload of the "data source"-related computer-implemented-tool (CIT_{DSC}) and thus being embedded into a "data source"-provided custom software execution container (CSEC_{DSC}), onloads (onl) the stored transfer data (TFD) either according to a wireless data communication (WLDC), in particular a "Near Field Communication <NFC>" or a "Bluetooth <BT>"-communication, or to a wired data communication (WRDC), in particular a "Universal Serial Bus <USB>"-communication and/or
- the offload component (OFLC), the processing component (PRCC) and the uploading component (UPLC) of the Upload-Unit (ULU) are formed as a "data sink"-related computer-implemented-tool (CIT_{DSN}), which when being assigned to the data sink (DSN) by an upload of the "data sink"-related computer-implemented-tool (CIT_{DSN}) and thus being embedded into a "data sink"-provided custom software execution container (CSEC_{DSN}) as well as to carry out the offload operation receives the stored transfer data (TFD) either according to a wireless data communication (WLDC), in particular a "Near Field Communication <NFC>" or a "Bluetooth <BT>"-communication, or to a wired data communication (WRDC), in particular a "Universal Serial Bus <USB>"-communication.

18. Data-Transfer-System (DTFS) according to one of the claims 10 to 16, **characterized in that**
a "Condition Based Service or a Condition Based Maintenance <CBS>"-scenario according to which within the business premises (BP) the data source (DSC) is an asset (AS) or device (DV), such as a motor (MOT), a drive (DRV), a valve (VAL), a pump (PUM), etc., and the data sink (DSN) is a maintenance system (MSY) or service system (SSY).

19. Data-Transfer-System (DTFS) according to one of the claims 10 to 16, **characterized in that**
a "displaying machine status"-scenario, in particular in a "Supervisory Control and Data Acquisition <SCADA>"-environment, according to which within the business premises (BP) the data source (DSC) is a dashboard and the data sink (DSN) is a central monitoring station.

20. Data-Transfer-System (DTFS) according to one of the claims 10 to 14, **characterized in that**
an "Update Push"-scenario, in particular updating firmware, configuration changes or non-real-time-critical commands, according to which within the business premises (BP) the data source (DSC) is an update-database and the data sink (DSN) is a device to be updated.

21. Data-Transfer-System (DTFS) according to one of the claims 10 to 14, **characterized in that**
a "data analytics"-scenario, according to which within the business premises (BP) the data source (DSC) is a machine or device generating various kind of data to be analyzed and the data sink (DSN) is a central location for running the analysis.
